# EUROPÄISCHE PATENTSCHRIFT

(11) **EP 3 521 219 B1**
(45) Veröffentlichungstag und Bekanntmachung des Hinweises auf die Patenterteilung: **24.03.2021**
(21) Anmeldenummer: 18207409.6
(22) Anmeldetag: 20.11.2018
(51) Int. Cl.: B65G 54/02

(54) **TRANSPORTVORRICHTUNG UND VERFAHREN ZUM ANPASSEN EINER TRANSPORTVORRICHTUNG**
TRANSPORT DEVICE AND METHOD FOR ADAPTING A TRANSPORT DEVICE
DISPOSITIF DE TRANSPORT ET PROCÉDÉ D'AJUSTEMENT D'UN DISPOSITIF DE TRANSPORT

(30) Priorität: 06.02.2018 DE 102018102612
(43) Veröffentlichungstag der Anmeldung: 07.08.2019
(73) Patentinhaber: Krones Aktiengesellschaft, 93073 Neutraubling (DE)
(72) Erfinder: STADLER, Thomas, 93073 Neutraubling (DE); DIETERSBERGER, Martin, 93073 Neutraubling (DE); CANALICCHIO, Christian, 93073 Neutraubling (DE); FECHTER, Wolfgang, 93073 Neutraubling (DE); HUTTER, Alban, 93073 Neutraubling (DE); TRIFFO, Andreas, 93073 Neutraubling (DE)
(74) Vertreter: Benninger, Johannes

(56) Entgegenhaltungen:
- EP-A1- 2 500 296
- WO-A1-2015/162182
- DE-A1- 19 501 571
- DE-A1-102012 210 329
- DE-A1-102013 212 377
- DE-A1-102014 119 110
- JP-A- S63 277 130
- US-A- 5 388 389

## Beschreibung

Die vorliegende Erfindung betrifft eine Transportvorrichtung und Verfahren zum Anpassen einer Transportvorrichtung gemäß den Merkmalen der unabhängigen Ansprüche.

Insbesondere in der Verpackungsindustrie werden unterschiedliche Stückgüter von einer Verarbeitungsmaschine zur nächsten Verarbeitungsmaschine transportiert. Die dafür verwendeten Transportvorrichtungen müssen dabei teilweise an die zu transportierenden Stückgüter angepasst werden, um einen sicheren Transport zu gewährleisten. Insbesondere beim Einzeltransport von Stückgütern kann es notwendig sein, eine bestimmte Anordnung und/oder Orientierung der Stückgüter innerhalb der Transportvorrichtung sicherzustellen. Hierfür sind in der Regel an den Transportvorrichtungen besondere Führungs- und/oder Haltestrukturen vorgesehen, die die Stückgüter während der Bewegung durch die Transportvorrichtung in der gewünschten Anordnung und/oder Orientierung festlegen. Bei einem Produktwechsel kann es in Abhängigkeit von der Art und Größe des neuen Produktes deshalb notwendig sein, dass die Führungs- und/oder Haltestrukturen an das neue Produkt angepasst werden. Dies kann bspw. durch eine Verstellung von seitlichen Führungsstrukturen durchgeführt werden. Haltestrukturen werden dagegen meist in Form von Formatteilen bereitgestellt, die bei einem Produktwechsel manuell oder automatisiert ausgetauscht werden müssen.

Bei Verwendung von Transporteinrichtungen mit Linearantriebstechnik werden die jeweiligen Stückgüter auf sogenannten Transportshuttles oder Transporteinheiten angeordnet und befördert. Die Transporteinheiten umfassen Formatteile mit Haltestrukturen für die zu transportierenden Stückgüter. Bei einer Produktumstellung auf breitere oder schmalere Produkte müssen die Formatteile ausgetauscht werden, um eine sichere Anordnung der Stückgüter auf den Transporteinheiten zu gewährleisten. Insbesondere müssen die Formatteile jeder einzelnen Transporteinheit ausgetauscht werden. Zudem ist es notwendig, eine Vielzahl unterschiedlicher Formatteile vorzuhalten und die jeweils nicht benötigten Formatteile zu lagern. Die für den Austausch der Formatteile benötigten Umstellzeiten stellen einen Produktionsausfall dar, da die Transporteinrichtung in diesem Zeitraum nicht verwendet werden kann.

Die DE 10 2014 226 965 A1 offenbart eine Inspektionsvorrichtung zum fortlaufenden Inspizieren von zugeführten Behältern oder Flaschen mit einer Fördereinrichtung zur aufeinanderfolgenden Zufuhr von Behältern, einer weiteren Fördereinrichtung zur Abfuhr der Behälter sowie eine zwischen den Fördereinrichtungen angeordnete Durchlaufstation für die Behälter oder Flaschen. Die Durchlaufstation soll eine Transporteinrichtung mit einem Individualantrieb und einer Vielzahl von mittels des Individualantriebs einzeln und unabhängig voneinander bewegbaren Fördermitteln aufweisen. Diese Transportrichtung soll der Beförderung der Behälter von der ersten Fördereinrichtung zur weiteren Fördereinrichtung dienen. Als Individualantriebe werden Linearmotorantriebe vorgeschlagen mit als Schlitten ausgebildeten Fördermitteln, die durch magnetische Wechselwirkung mit dem jeweiligen Linearmotorantrieb einzeln und unabhängig voneinander bewegbar sein sollen.

Weiterhin offenbart die DE 10 2015 100 444 A1 eine Transportvorrichtung mit mehreren Aufnahmen zum Transport einzelner Lasten, die insbesondere für die Verwendung in Verpackungsmaschinen geeignet sein soll. Die Aufnahmen sind in ihren Abständen sowie hinsichtlich ihrer Breite und ihrer Länge verstellbar. Die Aufnahmen können wahlweise lösbar an einer Kette, einem Band oder einem Seil befestigt sein. Darüber hinaus wird vorgeschlagen, die Aufnahmen magnetisch an die Transportvorrichtung zu koppeln. Als Antriebsoption ist eine Linearmotorbahn genannt.

Aus der EP 2 226 273 A3 ist weiterhin ein autonom elektromagnetischer Transportträger bekannt. Ein Bahnabschnitt umfasst eine als Stator eines LSM-Antriebs dienende Basis, die auch als mechanische Basis zur Anbringung des Bahnabschnitts beispielsweise an einem Unterbau dient. Als Führung für einen Mover dienen als Winkelbleche ausgeführte Führungsschienen, die in Schlitzen laufen, welche an den linken und rechten Seitenflächen eines Läufers des Movers ausgebildet sind. Die Führung des Bahnsystems sorgt für eine definierte Relativposition des Läufers bezüglich des Stators. Insbesondere wird hierdurch erreicht, dass eine Permanentmagnetanordnung des Läufers einen exakt definierten Abstand zum Stator einhält. Gemäß dem LSM-Antrieb ist der mit der Permanentmagnetanordnung versehene Läufer durch entsprechende Ansteuerung des Stators mittels einer Steuereinrichtung in Transportrichtung längs des Stators und somit in der den Stator umfassenden Bahn bewegbar. Während dieser Bewegung wird der Läufer durch die Führungsschienen geführt. Weiterhin können Segmente quer zur Transportrichtung relativ zum Läufer des Movers auseinanderbewegt und aufeinander zu bewegt werden

WO 2015/162182 A1 offenbart eine Transportvorrichtung nach dem Oberbegriff des Anspruchs 1.

Die Aufgabe der Erfindung besteht darin, eine Transportvorrichtung mit Linearantriebssystem und einer Mehrzahl von Transporteinheiten derart zu gestalten, dass die Transportvorrichtung bei einem Produktwechsel einfach und schnell an die neuen Produktionsbedingungen angepasst werden kann.

Die obige Aufgabe wird durch eine Transportvorrichtung und ein Verfahren zum Anpassen einer Transportvorrichtung gelöst, die die Merkmale der unabhängigen Patentansprüche umfassen. Weitere vorteilhafte Ausgestaltungen werden durch die Unteransprüche beschrieben.

Die erfindungsgemäße Transportvorrichtung für Stückgüter umfasst mindestens eine erste Führungsschiene und mindestens ein Linearmotorantriebssystem. Die Transportvorrichtung ist insbesondere für den Transport von Stückgütern innerhalb einer Verpackungsmaschine vorgesehen. Bei den vermittels der Transportvorrichtung zumindest bereichsweise in einer Transportrichtung zu transportierenden Stückgütern kann es sich bspw. um Einzelgüter wie Pakete, Schrumpfgebinde o.ä. handeln. Weiterhin kann vorgesehen sein, dass es sich bei den Stückgütern um leere oder bereits befüllte Umverpackungen, bspw. Kartonumverpackungen, handelt. Gemäß einer Ausführungsform der Erfindung kann vorgesehen sein, dass durch die Transportvorrichtung einseitig oben oder seitlich geöffnete Kartonumverpackungen transportiert werden, die bspw. im Bereich der Transportvorrichtung mit Artikeln beladen werden, insbesondere von oben her (Topload) oder durch seitliches Einschieben (Sideload). Das Beladen kann dabei bei einem kontinuierlichen Transportbetrieb oder aber bei einem diskontinuierlichen Transportbetrieb erfolgen.

Die erste Führungsschiene ist in der Regel als ortsfestes System ausgebildet, vorzugsweise umlaufend mit einem Obertrum und einem Untertrum. Das Linearmotorantriebssystem umfasst eine Mehrzahl von im Bereich der ersten Führungsschiene angeordneten Magnetspulen. Diese sind vorzugsweise jeweils einzeln bestrombar, wobei dies durch eine Steuerungseinheit der Transportvorrichtung reguliert und kontrolliert werden kann. An der mindestens einen ersten Führungsschiene ist mindestens eine Transporteinheit für die Stückgüter angeordnet, vorzugsweise ist eine Mehrzahl von Transporteinheiten für die Stückgüter vorgesehen. Bspw. handelt es sich um Transportshuttles oder Transportschlitten, die jeweils mindestens eine Bewegungseinrichtung umfassen und die von dem Linearmotorantriebssystem zumindest bereichsweise in einer Transportrichtung angetrieben werden können. Insbesondere umfassen die Bewegungseinrichtungen der Transporteinheiten jeweils mindestens einen Permanentmagneten. Beim Anlegen von elektrischer Energie an die Magnetspulen der ersten Führungsschiene baut sich ein wechselndes Magnetfeld auf, das die Transporteinheiten antreibt. Da jede Magnetspule individuell bestromt werden kann, ist eine einzeln gesteuerte, individuelle Bewegung jeder Transporteinheit möglich. Bei einer umlaufenden ersten Führungsschiene werden die Transporteinheiten durch das Linearmotorantriebssystem im Bereich des Obertrums vorzugsweise in Transportrichtung und im Bereich des Untertrums vorzugsweise entgegen der Transportrichtung bewegt.

Jede Transporteinheit umfasst mindestens eine erste Halteeinrichtung und eine zweite Halteeinrichtung, zwischen denen das Stückgut angeordnet und/oder ausgerichtet und/oder fixiert werden kann. Hierbei ist vorgesehen, dass ein erster Abstand zwischen der ersten Halteeinrichtung und der zweiten Halteeinrichtung orthogonal zur Transportrichtung verstellt werden kann. Aufgrund dieser Anpassungsmöglichkeit können nunmehr Stückgüter mit orthogonal zur Transportrichtung ausgebildeter unterschiedlicher Breite durch die Transportvorrichtung transportiert werden, ohne diese vorher bspw. drehen zu müssen oder einen aufwändigen Formatwechsel an den Transporteinheiten durchführen zu müssen.

Vorzugsweise können bei einem Produktwechsel alle Transporteinheiten innerhalb einer vorbeschriebenen Transportvorrichtung synchron, insbesondere zeitgleich, verstellt und an die neuen Produkte angepasst werden.

Weiterhin umfasst die Transportvorrichtung mindestens eine erste Führungseinrichtung, die parallel zur ersten Führungsschiene ausgebildet ist und an der jeweils die erste Halteeinrichtung der Transporteinheit geführt ist, bspw. eine erste umlaufende Führungseinrichtung parallel zur ersten umlaufenden Führungsschiene. Die zweite Halteeinrichtung der Transporteinheit und die Bewegungseinrichtung der jeweiligen Transporteinheit sind der ersten Führungsschiene zugeordnet und an dieser geführt. Bei dieser Ausführungsform ist vorgesehen, dass zumindest die erste Führungseinrichtung beweglich ausgebildet ist. Insbesondere sind der ersten Führungseinrichtung Mittel zur Abstandsveränderung gegenüber der ersten Führungsschiene zugeordnet, so dass der Abstand zwischen der ersten Führungseinrichtung und der ersten Führungsschiene verstellt werden kann. Vorzugsweise erfolgt die Abstandsänderung jeweils derart, dass die erste Führungsschiene und die erste Führungseinrichtung in jedem Produktionsmodus jeweils parallel zueinander angeordnet sind. Dagegen kann im Verstellmodus, wenn die Transportvorrichtung von einem ersten Produktionsmodus in einen zweiten Produktionsmodus überführt wird, zumindest kurzzeitig die parallele Anordnung der ersten Führungsschiene und der ersten Führungseinrichtung aufgehoben sein.

Die Transporteinheiten sind derart ausgebildet, dass sie zwei, vorzugsweise miteinander verbundene, jedoch gegeneinander beweglich ausgebildete Teilbereiche umfassen. Die erste Halteeinrichtung ist einem ersten Teilbereich zugeordnet und die zweite Halteeinrichtung sowie die Bewegungseinrichtung der Transporteinheit sind einem zweiten Teilbereich zugeordnet. Insbesondere können der erste und der zweite Teilbereich derart relativ zueinander bewegt werden, dass durch eine entsprechende Relativbewegung ein erster Abstand zwischen der ersten Halteeinrichtung und der zweiten Halteeinrichtung orthogonal zur Transportrichtung verändert werden kann.

Wird nunmehr der Abstand zwischen der ersten Führungseinrichtung und der ersten Führungsschiene verringert, dann verringert sich der Abstand zwischen der an der ersten Führungseinrichtung angeordneten ersten Halteeinrichtung und der an der ersten Führungsschiene angeordneten zweiten Halteeinrichtung orthogonal zur Längserstreckungsrichtung von Führungsschiene und Führungseinrichtung und orthogonal zur Transportrichtung. Sind mehrere solcher Transporteinrichtungen innerhalb der Transportvorrichtung an der ersten Führungseinrichtung und der ersten Führungsschiene angeordnet, dann werden vermittels des vorbeschriebenen Verstellmechanismus alle Transporteinrichtungen gleichzeitig und synchron an das neue Produktformat angepasst, wodurch eine zeit- und arbeitsintensive Formatumstellung entfällt.

Die Abstandsänderung zwischen der ersten Führungsschiene und der ersten Führungseinrichtung kann bspw. vermittels einer oder mehrerer Gewindespindeln erfolgen. Durch Drehen einer Kurbel, die sich an der mindestens einen zwischen der ersten Führungsschiene und der ersten Führungseinrichtung angeordneten Gewindespindel befindet, bewegt sich die erste Führungseinrichtung und somit der die erste Halteeinrichtung der Transporteinrichtungen umfassende Teilbereich der Transporteinheiten in Richtung der ersten Führungsschiene. Für den Fachmann ist es selbstverständlich, dass stattdessen auch die erste Führungsschiene relativ zur ersten Führungseinrichtung verschoben werden kann oder aber dass eine Gewindespindel mit gegenläufigen Gewinden verwendet werden kann, um eine simultane Bewegung der ersten Führungsschiene und der ersten Führungseinrichtung aufeinander zu oder voneinander weg zu erzeugen.

Gemäß einem zweiten Ausführungsbeispiel der Erfindung umfasst die Transportvorrichtung eine erste Führungseinrichtung und eine zweite Führungseinrichtung, die beidseitig parallel zur ersten Führungsschiene angeordnet sind. Vorzugsweise sind die beiden Führungseinrichtungen und die erste Führungsschiene jeweils als umlaufendes System ausgebildet und die beiden Führungseinrichtungen weisen jeweils denselben Abstand zur mittig angeordneten ersten Führungsschiene auf. Die Transporteinheiten sind jeweils derart ausgebildet und innerhalb der Transportvorrichtung angeordnet, dass die erste Halteeinrichtung der Transporteinheit an der ersten Führungseinrichtung angeordnet und geführt ist, die zweite Halteeinrichtung der Transporteinheit an der zweiten Führungseinrichtung angeordnet und geführt ist und die Bewegungseinrichtung der jeweiligen Transporteinheit an der mittig zwischen der ersten Führungseinrichtung und der zweiten Führungseinrichtung angeordneten ersten Führungsschiene angeordnet und geführt ist.

Bei dieser Ausführungsform ist vorgesehen, dass die erste Führungseinrichtung und die zweite Führungseinrichtung gegeneinander zustellbar ausgebildet sind, insbesondere synchron zueinander zustellbar oder voneinander beabstandbar. Bspw. kann als Verstellmechanismus mindestens eine Gewindespindel vorgesehen sein, die an einem mit der ersten Führungseinrichtung verbundenen freien Ende ein als Linksgewinde ausgebildetes Außengewinde aufweist, das in eine entsprechende Aufnahme der ersten Führungseinrichtung mit einem korrespondierenden Innengewinde greift. Weiterhin kann vorgesehen sein, dass die mindestens eine Gewindespindel an dem gegenüberliegenden freien Ende ein als Rechtsgewinde ausgebildetes Außengewinde aufweist, das in eine entsprechende Aufnahme der zweiten Führungseinrichtung mit einem korrespondierenden Innengewinde greift. In Abhängigkeit von der Drehrichtung werden die beiden Führungseinrichtungen voneinander weg oder aufeinander zu bewegt. Somit wird auch der jeweilige Abstand zwischen den Führungseinrichtungen und der mittigen Führungsschiene bzw. der Abstand zwischen den beiden Führungseinrichtungen entsprechend verändert. Vorzugsweise sind mindestens zwei Gewindespindeln vorgesehen, die synchron betrieben werden, um die Abstandsverstellung vorzunehmen. Bei der Abstandsverstellung werden gleichzeitig alle an der Transportvorrichtung angeordneten Transporteinheiten in ihrer Breite verstellt, da die jeweils an der ersten Führungseinrichtung angeordnete erste Halteeinrichtung und die an der zweiten Führungseinrichtung angeordnete zweite Halteeinrichtung gemeinsam mit diesen gegeneinander und gegenüber der Bewegungseinrichtung der Transporteinheit verschoben und somit anders beabstandet werden.

Gemäß einem alternativen dritten Ausführungsbeispiel der Erfindung ist die erste Führungseinrichtung als zweite Führungsschiene ausgebildet, die ebenfalls ein Linearmotorantriebssystem umfasst. Insbesondere weist die zweite Führungsschiene eine Mehrzahl von Magnetspulen zur Bewegung der Transporteinheiten auf. Bei einer solchen Ausführungsform einer Transportvorrichtung finden Transporteinheiten Verwendung, die zwei Bewegungseinrichtungen aufweisen. Insbesondere sind eine erste Bewegungseinrichtung und die erste Halteeinrichtung der Transporteinheit an der ersten Führungsschiene angeordnet, während eine zweite Bewegungseinrichtung und die zweite Halteeinrichtung der Transporteinheit an der zweiten Führungsschiene angeordnet sind. Weiterhin ist eine Steuerungseinheit vorgesehen, die die Bewegungen der ersten Bewegungseinrichtung an der ersten Führungsschiene und der zweiten Bewegungseinrichtung an der zweiten Führungsschiene ansteuert und insbesondere synchronisiert. Vorzugsweise werden die erste Bewegungseinrichtung und die zweite Bewegungseinrichtung einer Transporteinheit jeweils parallel zueinander und mit gleicher Geschwindigkeit durch die Transportvorrichtung bewegt.

Die Abstandsvariabilität zwischen der ersten Halteeinrichtung und der zweiten Halteeinrichtung der jeweiligen Transporteinheit wird bspw. dadurch erzielt, dass der ersten Halteeinrichtung ein in Richtung der zweiten Halteeinrichtung weisender erster Teilbereich zugeordnet ist und dass der zweiten Halteeinrichtung ein in Richtung der ersten Halteeinrichtung weisender zweiter Teilbereich zugeordnet ist. Der erste Teilbereich und der zweite Teilbereich bilden zusammen eine gemeinsame Aufstandsfläche für das zu transportierende Stückgut. Bspw. sind der erste Teilbereich und der zweite Teilbereich jeweils als Kammstruktur mit Kammzinken ausgebildet oder weisen eine solche auf, wobei die Kammzinken des ersten Teilbereichs und die Kammzinken des zweiten Teilbereichs zumindest teilweise ineinandergreifen. Wird der Abstand zwischen der ersten und der zweiten Halteeinrichtung verringert, dann werden die Kammzinken der beiden Teilbereiche weiter ineinander geschoben. Wird der Abstand zwischen der ersten und der zweiten Halteeinrichtung dagegen vergrößert, dann werden die Kammzinken auseinander gezogen. Vorzugsweise ist eine Begrenzungseinrichtung vorgesehen, die verhindert, dass die Kammzinken komplett auseinandergezogen werden können. Die Begrenzungseinrichtung kann eine mechanische Sperreinrichtung an den Transporteinheiten selbst sein. Die Begrenzung der Abstandsveränderung kann aber auch durch eine Begrenzung der Abstandsveränderung zwischen der mindestens einen Führungsschiene und der mindestens einen Führungseinrichtung gemäß einer vorbeschriebenen Ausführungsform erfolgen, die bspw. durch die Länge der verwendeten Gewindespindel o.ä. begrenzt wird.

Weiterhin wird eine Ausführungsform einer Transporteinheit beschrieben, die insbesondere bei einem oben beschriebenen zweiten Ausführungsbeispiel der Transporteinrichtung Verwendung findet. Die Transporteinheit weist eine an der ersten mittleren Führungsschiene angeordnete in Transportrichtung vorauseilende erste Bewegungseinrichtung und eine in Transportrichtung nachlaufende zweite Bewegungseinrichtung auf. Der ersten Bewegungseinrichtung sind die erste Halteeinrichtung und die zweite Halteeinrichtung zugeordnet und es kann ein Abstand zwischen diesen beiden Halteeinrichtungen orthogonal zur Transportrichtung eingestellt werden. Der zweiten Bewegungseinrichtung sind eine dritte Halteeinrichtung und eine vierte Halteeinrichtung zugeordnet und es kann ein Abstand zwischen diesen beiden Halteeinrichtungen orthogonal zur Transportrichtung eingestellt werden. Die beiden Bewegungseinrichtungen können in einem Einstellmodus der Transportvorrichtung, bspw. während eines Produktwechsels, unabhängig voneinander verstellt werden. Insbesondere kann ein zweiter Abstand zwischen der ersten Bewegungseinrichtung und der zweiten Bewegungseinrichtung einer Transporteinheit in Transportrichtung entsprechend einer Produktlänge der zu transportierenden Stückgüter eingestellt werden. Dadurch kann ein dritter Abstand zwischen der an der ersten Führungseinrichtung geführt angeordneten ersten Halteeinrichtung und der ebenfalls an der ersten Führungseinrichtung geführt angeordneten dritten Halteeinrichtung sowie zwischen der an der zweiten Führungseinrichtung geführt angeordneten zweiten Halteeinrichtung und der ebenfalls an der zweiten Führungseinrichtung geführt angeordneten vierten Halteeinrichtung, insbesondere gleichzeitig und/oder synchron, eingestellt werden. Im Produktionsmodus werden die erste und zweite Bewegungseinrichtung dagegen synchron gesteuert durch das Linearmotorantriebssystem angetrieben, so dass der zweite Abstand im Produktionsmodus vorzugsweise konstant ist und nicht verändert wird. Durch die Verstellung des Abstandes zwischen den Führungseinrichtungen können dagegen die ersten Abstände zwischen der ersten und zweiten Halteeinrichtung sowie der dritten und vierten Halteeinrichtung aller Transporteinrichtungen gleichzeitig an die neuen Produktanforderungen angepasst werden.

Gemäß einer weiteren Ausführungsform kann vorgesehen sein, dass an einer nicht bestromten Führungseinrichtung Positionssensoren angeordnet sind, die entsprechende Signale an den Transporteinheiten erfassen und an die Steuerungseinheit übermitteln, wodurch zu jedem Zeitpunkt oder zumindest weitgehend zu jedem Zeitpunkt die jeweilige Position der mindestens einen Transporteinheit innerhalb der Transportvorrichtung genau bestimmbar ist. Hierbei können unterschiedliche dem Fachmann bekannte Positionssensoren Verwendung finden, bspw. induktive Sensoren, Potentiometergeber o.ä.

Weiterhin wird ein Verfahren zum Anpassen einer Transportvorrichtung für Stückgüter bei einem Produktwechsel an jeweilige Abmessungen der im Anschluss an den Produktwechsel zu transportierenden Stückgüter beschrieben. Die Transportvorrichtung umfasst ein vermittels eines Linearmotorantriebssystems angetriebenes Fördersystem, insbesondere mindestens eine erste Führungsschiene mit einem Linearmotorantriebssystem und mindestens eine an der ersten Führungsschiene angeordnete Transporteinheit für die Stückgüter. Die Transporteinrichtung weist mindestens eine erste Halteeinrichtung und eine zweite Halteeinrichtung für die Stückgüter auf, zwischen denen die Stückgüter für den Transport angeordnet und/oder fixiert werden. Die mindestens eine Transporteinheit kann an der ersten Führungsschiene zumindest bereichsweise in Transportrichtung bewegt werden. Die Transportvorrichtung und die mindestens eine Transporteinheit sind derart einstellbar ausgebildet, dass ein erster Abstand zwischen der ersten Halteeinrichtung und der zweiten Halteeinrichtung der Transporteinheit orthogonal zur Transportrichtung entsprechend der Abmessungen der jeweils in Transportrichtung zu befördernden Stückgüter eingestellt werden kann. Das Verfahren dient insbesondere der Einstellung der Breite von Transporteinheiten einer oben beschriebenen Transportvorrichtung.

Ein besonderer Vorteil der hier beschriebenen Transportvorrichtung und des Verfahrens besteht darin, dass die Umstellung aller Transporteinheiten innerhalb der Transportvorrichtung gleichzeitig und synchron erfolgt, wodurch die Umstellung bei einem Produktwechsel extrem schnell durchgeführt werden kann. Dies ist aufgrund kurzer Leerlaufzeiten für den Betreiber einer Anlage extrem kostengünstig. Zudem erfolgt die Umstellung aller Transporteinrichtungen einheitlich.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, die erfindungsgemäße Transportvorrichtung ein Fördersystem umfassen oder wahlweise ein Teil eines umfassenderen Fördersystems sein, das nachfolgend nochmals in verschiedenen Varianten und Betriebsmodi erläutert wird.

Die erfindungsgemäße Transportvorrichtung dient insbesondere dem Transport von Stückgütern, bspw. von Paketen und/oder leeren oder mit Artikeln befüllten Umverpackungen. Die Transportvorrichtung kann ein Fördersystem mit mindestens einer ersten umlaufenden Führungsschiene mit einem Obertrum und einem parallel zum Obertrum und normalerweise unterhalb des Obertrums verlaufenden Untertrum sowie einer Linearmotorantriebseinheit umfassen. Die Linearmotorantriebseinheit umfasst eine Mehrzahl von im Bereich der ersten Führungsschiene angeordneten Magnetspulen, die vorzugsweise über eine Steuerungseinrichtung einzeln ansteuerbar sind und jeweils einzeln bestromt werden können.

An der ersten Führungsschiene ist mindestens eine Transporteinheit zur Aufnahme des jeweiligen Stückgutes zum Transport in Transportrichtung angeordnet. So kann die mindestens eine Transporteinheit auf dem Obertrum insbesondere in Transportrichtung und auf dem Untertrum entgegen der Transportrichtung bewegt werden.

Die Transporteinheit umfasst mindestens eine an der ersten Führungsschiene angeordnete Bewegungseinrichtung sowie eine der Bewegungseinrichtung zugeordnete erste Halteeinrichtung und eine zweite Halteeinrichtung. Wahlweise kann die Transporteinheit eine erste Bewegungseinrichtung mit zugeordneter erster Halteeinrichtung und zweiter Halteeinrichtung sowie eine zweite Bewegungseinrichtung mit einer zugeordneten dritten Halteeinrichtung und einer vierten Halteeinrichtung aufweisen. Das Stückgut wird zwischen der ersten Halteeinrichtung, der zweiten Halteeinrichtung, der dritten Halteeinrichtung und der vierten Halteeinrichtung angeordnet und durch diese gehalten und für den Transport fixiert. Insbesondere sind die Halteeinrichtungen derart ausgebildet, dass sie ein Verrutschen des auf einer Transporteinheit angeordneten Stückgutes in Transportrichtung oder entgegen der Transportrichtung und/oder orthogonal zur Transportrichtung o.ä. verhindern. Insbesondere wird durch die Halteeinrichtungen auch ein Verdrehen des Stückgutes auf der Transporteinheit verhindert und eine positionsgenaue Anordnung des Stückgutes auf der Transporteinheit erzielt. Dies gewährleistet bspw. eine definierte Anordnung und Ausrichtung einer optional vorhandenen Befüllöffnung des Stückgutes, so dass bspw. ein Stückgut in Form einer Kartonumverpackung mit Artikeln befüllt werden kann, während es sich auf der Transportvorrichtung befindet und in Transportrichtung transportiert wird. Dabei kann vorgesehen sein, dass die Transportgeschwindigkeit der Transporteinheit für den Befüllvorgang zumindest kurzzeitig reduziert wird, insbesondere auf einen Wert von Null.

Zur Bewegung der Transporteinheiten durch die bzw. mittels der Transportvorrichtung entlang der mit Magnetspulen ausgestatteten Führungsschiene sind die Bewegungseinrichtungen vorzugsweise jeweils mit mindestens einem Permanentmagneten ausgestattet. Insbesondere sind die erste Bewegungseinrichtung und die zweite Bewegungseinrichtung jeder Transporteinheit jeweils mit einem Permanentmagneten ausgestattet. Durch Bestromung einer Magnetspule entsteht ein lokales Magnetfeld und somit ein Kraftfluss zwischen der Magnetspule und dem/den Permanentmagneten der Transporteinheit. Durch entsprechende Ansteuerung und Bestromung einzelner Magnetspulen kann ein wanderndes Magnetfeld erzeugt werden, durch welches jede Transporteinheit unabhängig von weiteren Transporteinheiten bewegt werden kann.

Die Transporteinheiten können bspw. dadurch an die Größe der zu befördernden Stückgüter angepasst werden, indem ein erster Abstand zwischen der ersten Halteeinrichtung und der zweiten Halteeinrichtung sowie im Ausführungsbeispiel synchron dazu ein erster Abstand zwischen der dritten Halteeinrichtung und der vierten Halteeinrichtung orthogonal zur Transportrichtung verstellt werden kann und somit an eine Breite des Stückgutes quer zur Transportrichtung angepasst werden kann. Eine Transporteinheit kann bspw. auf Grundlage einer Verwendung von zwei in Transportrichtung hintereinander angeordneten Bewegungseinrichtungen zudem noch bedarfsweise an eine Länge des Stückgutes in Transportrichtung gesehen angepasst werden, indem ein zweiter Abstand zwischen der ersten Bewegungseinrichtung und der zweiten Bewegungseinrichtung eingestellt bzw. variiert werden kann, so dass sich ein dritter Abstand zwischen der ersten Halteeinrichtung und der dritten Halteeinrichtung sowie der zweiten Halteeinrichtung und der vierten Halteeinrichtung ergibt, der insbesondere gemäß der Länge des Stückgutes in Transportrichtung eingestellt wird. Diese Einstellung erfolgt insbesondere über eine gesteuerte Bestromung einzelner Magnetspulen des Fördersystems.

Im weiteren Produktionsablauf muss nach erfolgter Einstellung des zweiten Abstandes zwischen der ersten Bewegungseinrichtung und der zweiten Bewegungseinrichtung sichergestellt werden, dass die beiden Bewegungseinrichtungen jeder Transporteinheit synchron bewegt werden, so dass der eingestellte zweite Abstand sowie der dritte Abstand während des Transports eines Stückgutes durch die Transportvorrichtung konstant ist und nicht verändert wird.

Die Transportvorrichtung kann weiterhin ein Führungs- und Verstellsystem zur Einstellung des ersten Abstandes zwischen der ersten Halteeinrichtung und der zweiten Halteeinrichtung sowie der dritten Halteeinrichtung und der vierten Halteeinrichtung orthogonal zur Transportrichtung umfassen. Das Führungs- und Verstellsystem umfasst mindestens eine erste umlaufende Führungseinrichtung, die parallel zur ersten Führungsschiene ausgebildet ist und auf der jeweils die erste Halteeinrichtung und die dritte Halteeinrichtung der Transporteinheit geführt sind. Bei der hier vorgeschlagenen Ausführungsform der Transportvorrichtung mit Transporteinheiten kann weiterhin eine zweite umlaufende Führungseinrichtung vorgesehen sein, auf der jeweils die zweite Halteeinrichtung und die vierte Halteeinrichtung der Transporteinheit geführt sind.

Die beiden Führungseinrichtungen können beidseitig parallel zur Führungsschiene angeordnet sein. Die Bewegungseinrichtungen der Transporteinheit werden auf der Führungsschiene angeordnet, geführt und angetrieben.

Die Führungseinrichtungen sind gegenüber der Führungsschiene beweglich ausgebildet. Insbesondere können den Führungseinrichtungen Mittel zur Abstandsveränderung gegenüber der Führungsschiene zugeordnet sein. So kann die Führungsschiene etwa orthogonal zur Transportrichtung nach beiden Seiten weisende Gewindespindeln mit Verstellkurbeln aufweisen. Die Führungseinrichtungen weisen in diesem Fall entsprechende Aufnahmen bzw. Durchtrittsöffnungen mit Innengewinde für die Gewindespindeln auf sowie mindestens eine Aufnahme bzw. Durchtrittsöffnung für die Verstellkurbel. Die Bewegung der Gewindespindeln ist an die Bewegung der Verstellkurbel gekoppelt. Zudem ist vorgesehen, dass jede Gewindespindel im Bereich des einen freien Endes ein Linksgewinde und im Bereich des gegenüberliegenden freien Endes ein Rechtsgewinde aufweist. Die jeweils korrespondierenden Aufnahmen der Führungseinrichtungen sind entsprechend dem aufzunehmenden Außengewinde mit korrespondierenden Innengewinden ausgebildet. Durch gleichmäßiges Drehen beider Verstellkurbeln werden die Führungseinrichtungen parallel zur Führungsschiene voneinander weg oder aufeinander zu bewegt, wodurch sich der erste Abstand zwischen der ersten Halteeinrichtung und der zweiten Halteeinrichtung sowie der dritten Halteeinrichtung und der vierten Halteeinrichtung der Transporteinheit verändert.

Es sei an dieser Stelle darauf hingewiesen, dass durch eine Einstellung des Abstandes zwischen den parallel ausgerichteten Führungseinrichtungen auch der Abstand zwischen der ersten Halteeinrichtung und der zweiten Halteeinrichtung sowie der Abstand zwischen der dritten Halteeinrichtung und der vierten Halteeinrichtung jeder Transporteinheit verändert werden kann. Insbesondere liegt in einem ersten Betriebsmodus ein erster Abstand vor, der größer ist als der erste Abstand in einem zweiten Betriebsmodus. Somit können im ersten Betriebsmodus Stückgüter einer größeren Breite innerhalb und mittels der Transportvorrichtung befördert werden. Zudem ist ersichtlich, dass der zweite Abstand zwischen der ersten und der zweiten Bewegungseinrichtung im ersten Betriebsmodus größer gewählt ist als im zweiten Betriebsmodus. Somit ist der dritte Abstand zwischen der ersten Halteeinrichtung und der dritten Halteeinrichtung sowie zwischen der zweiten Halteeinrichtung und der vierten Halteeinrichtung im ersten Betriebsmodus ebenfalls größer als im zweiten Betriebsmodus.

Wahlweise kann das Fördersystem zwei Führungsschienen aufweisen, die jeweils mit Linearmotorantriebseinheiten in Form von Magnetspulen ausgestattet sind, insbesondere eine erste Führungsschiene und eine zweite Führungsschiene. Bei dieser Ausführungsvariante umfasst jede Transporteinheit insgesamt vier Bewegungseinrichtungen, wobei jede dieser Bewegungseinrichtungen einen Permanentmagneten umfasst, und wobei jeder Bewegungseinrichtung eine Halteeinrichtung zugeordnet ist. Durch Einstellung eines definierten Abstandes zwischen den parallel angeordneten ersten und zweiten Führungsschienen sowie durch Einstellung eines zweiten Abstandes zwischen den jeweils auf derselben Führungsschiene angeordneten Bewegungseinrichtungen kann die Transporteinheit an die Größe des zu transportierenden Stückgutes angepasst werden.

Nach Einstellung des zweiten Abstandes zwischen den in Transportrichtung fluchtend angeordneten Bewegungseinrichtungen ist darauf zu achten, dass diese im laufenden Produktionsbetrieb synchron gesteuert bewegt werden, um einen sicheren Transport der Stückgüter zu gewährleisten. Zudem müssen auch die einander gegenüberliegenden Bewegungseinrichtungen an den unterschiedlichen Führungsschienen synchron gesteuert durch die Transportvorrichtung bewegt werden, um ein Auseinanderdriften der ersten Halteeinrichtung und der zweiten Halteeinrichtung und/oder der dritten Halteeinrichtung und der vierten Halteeinrichtung in Transportrichtung zu vermeiden.

Wahlweise kann das Fördersystem auch eine erste Führungsschiene mit Linearmotorantriebseinheit in Form von Magnetspulen und eine erste Führungseinrichtung umfassen. Bei dieser Variante umfasst jede Transporteinheit vorzugsweise insgesamt zwei an der ersten Führungsschiene angeordnete Bewegungseinrichtungen mit Permanentmagneten. An der in Transportrichtung vorauseilenden ersten Bewegungseinrichtung ist die vierte Halteeinrichtung angeordnet. An der in Transportrichtung nachlaufenden zweiten Bewegungseinrichtung ist die zweite Halteeinrichtung angeordnet.

Die erste Halteeinrichtung und die dritte Halteeinrichtung der Transporteinheit sind dagegen auf der Führungseinrichtung geführt angeordnet. Durch Einstellung eines Abstandes zwischen der angeordneten ersten Führungsschiene und der parallel dazu angeordneten ersten Führungseinrichtung sowie durch Einstellung eines zweiten Abstandes zwischen den an der ersten Führungsschiene angeordneten Bewegungseinrichtungen kann die Transporteinheit hierdurch an die Größe des zu transportierenden Stückgutes angepasst werden.

Vorzugsweise ist hierbei nach Einstellung des zweiten Abstandes zwischen den in Transportrichtung fluchtend angeordneten Bewegungseinrichtungen darauf zu achten, dass diese im laufenden Produktionsbetrieb synchron gesteuert bewegt werden, um einen sicheren Transport der Stückgüter bei konstanter Größe der Transporteinheit zu gewährleisten. Weiterhin kann eine mechanische Kopplung zwischen den die erste Halteeinrichtung und die dritte Halteeinrichtung umfassenden Bereichen der Transporteinheit mit den die zweite Halteeinrichtung und die vierte Halteeinrichtung umfassenden Bereichen der Transporteinheit notwendig und/oder vorteilhaft sein.

Eine solche mechanische Kopplung soll insbesondere gewährleisten, dass die die erste Halteeinrichtung und die dritte Halteeinrichtung umfassenden Bereiche der Transporteinheit bei Bewegung der Bewegungseinrichtungen in Transportrichtung synchron mit den die zweite Halteeinrichtung und die vierte Halteeinrichtung umfassenden Bereichen der Transporteinheit mitgeführt werden. Die mechanische Kopplung muss insbesondere dergestalt ausgebildet sein, dass eine Abstandsveränderung zwischen der ersten Halteeinrichtung und der zweiten Halteeinrichtung sowie der dritten Halteeinrichtung und der vierten Halteeinrichtung orthogonal zu Transportrichtung möglich ist. Die beschriebene mechanische Kopplung ist nicht nur auf das Ausführungsbeispiel der Transporteinheiten beschränkt, sondern kann insbesondere auch bei anderweitig ausgestalteten Transporteinheiten vorteilhaft eingesetzt werden.

Wahlweise kann eine mechanische Kopplung bspw. dadurch erzielt werden, dass der ersten Halteeinrichtung ein in Richtung der zweiten Halteeinrichtung weisender erster Teilbereich zugeordnet ist, und dass der zweiten Halteeinrichtung ein in Richtung der ersten Halteeinrichtung weisender zweiter Teilbereich zugeordnet ist, wobei der erste Teilbereich und der zweite Teilbereich eine erste gemeinsame Teil-Aufstandsfläche für das zu transportierende Stückgut bilden. Weiterhin ist der dritten Halteeinrichtung ein in Richtung der vierten Halteeinrichtung weisender dritter Teilbereich zugeordnet und der vierten Halteeinrichtung ist ein in Richtung der dritten Halteeinrichtung weisender vierter Teilbereich zugeordnet ist, wobei der dritte Teilbereich und der vierte Teilbereich eine zweite gemeinsame Teil-Aufstandsfläche für das zu transportierende Stückgut bilden. Insbesondere bilden die erste gemeinsame Teil-Aufstandsfläche und die zweite gemeinsame Teil-Aufstandsfläche die Gesamt-Aufstandsfläche der Transporteinheit.

Besonders bevorzugt sind die Teilbereiche jeweils als Kammstruktur mit Kammzinken ausgebildet, wobei die Kammzinken des ersten Teilbereichs zwischen die Kammzinken des zweiten Teilbereichs greifen, und wobei die Kammzinken des dritten Teilbereichs zwischen die Kammzinken des vierten Teilbereichs greifen. Insbesondere kann vorgesehen sein, dass die Kammzinken in jedem einstellbaren Betriebsmodus jeweils zumindest bereichsweise ineinandergreifen, wodurch eine mechanische Kopplung zwischen der ersten Halteeinrichtung und der zweiten Halteeinrichtung sowie zwischen der dritten Halteeinrichtung und der vierten Halteeinrichtung erzielt werden kann.

Um ein solches zumindest bereichsweises Ineinandergreifen in jedem Betriebs- und/oder Produktionsmodus zu gewährleisten, kann eine Begrenzungseinrichtung vorgesehen sein, die ein komplettes Auseinanderziehen der Kammzinken verhindert, bspw. eine mechanische Sperreinrichtung an den Transporteinheiten selbst.

Die Begrenzung der Abstandsveränderung kann aber wahlweise auch durch eine Begrenzung der Abstandsveränderung zwischen der mindestens einen Führungsschiene und der mindestens einen Führungseinrichtung erfolgen, die bspw. durch die Länge der verwendeten Gewindespindel o.ä. begrenzt wird.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine erste Ausführungsform einer erfindungsgemäßen Transportvorrichtung in einem ersten Betriebsmodus.
Fig. 2 zeigt das Fördersystem der erfindungsgemäßen Transportvorrichtung gemäß Fig. 1.
Fig. 3 zeigt das Führungs- und Verstellsystem der gezeigten Ausführungsvariante der erfindungsgemäßen Transportvorrichtung gemäß Fig. 1.
Fig. 4 zeigt erneut die erste Ausführungsform der erfindungsgemäßen Transportvorrichtung gemäß Fig. 1 im ersten Betriebsmodus.
Fig. 5 zeigt die erste Ausführungsform der erfindungsgemäßen Transportvorrichtung gemäß Figuren 1 und 4 in einem zweiten Betriebsmodus.
Fig. 6 zeigt erneut das Führungs- und Verstellsystem der erfindungsgemäßen Transportvorrichtung gemäß Figuren 1 und 4 im ersten Betriebsmodus.
Fig. 7 zeigt das Führungs- und Verstellsystem der erfindungsgemäßen Transportvorrichtung gemäß Fig. 5 in einem zweiten Betriebsmodus.
Fig. 8 zeigt eine perspektivische Darstellung einer Transporteinheit einer erfindungsgemäßen Transportvorrichtung im ersten Betriebsmodus.
Fig. 9 zeigt eine Darstellung einer Transporteinheit einer erfindungsgemäßen Transportvorrichtung im ersten Betriebsmodus von oben.
Fig. 10 zeigt eine perspektivische Darstellung einer Transporteinheit einer erfindungsgemäßen Transportvorrichtung in einem zweiten Betriebsmodus.
Fig. 11 zeigt eine Darstellung einer Transporteinheit einer erfindungsgemäßen Transportvorrichtung in einem zweiten Betriebsmodus von oben.
Fig. 12 zeigt eine perspektivische Darstellung einer Transporteinheit einer zweiten Ausführungsform einer Transportvorrichtung gemäß vorliegender Erfindung.
Fig. 13 zeigt eine perspektivische Darstellung einer Transporteinheit einer dritten Ausführungsform einer Transportvorrichtung gemäß vorliegender Erfindung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen sind lediglich Beispiele, wie die erfindungsgemäße Vorrichtung oder das erfindungsgemäße Verfahren ausgestaltet sein können, und stellen keine abschließende Begrenzung dar.

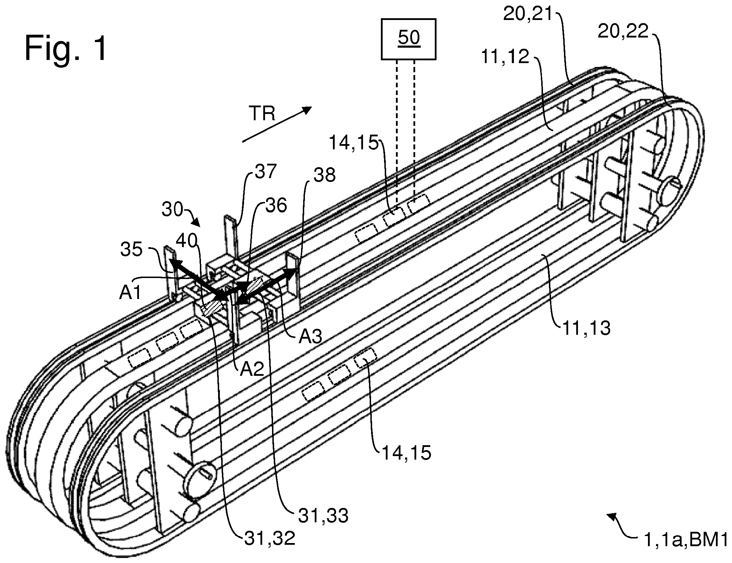

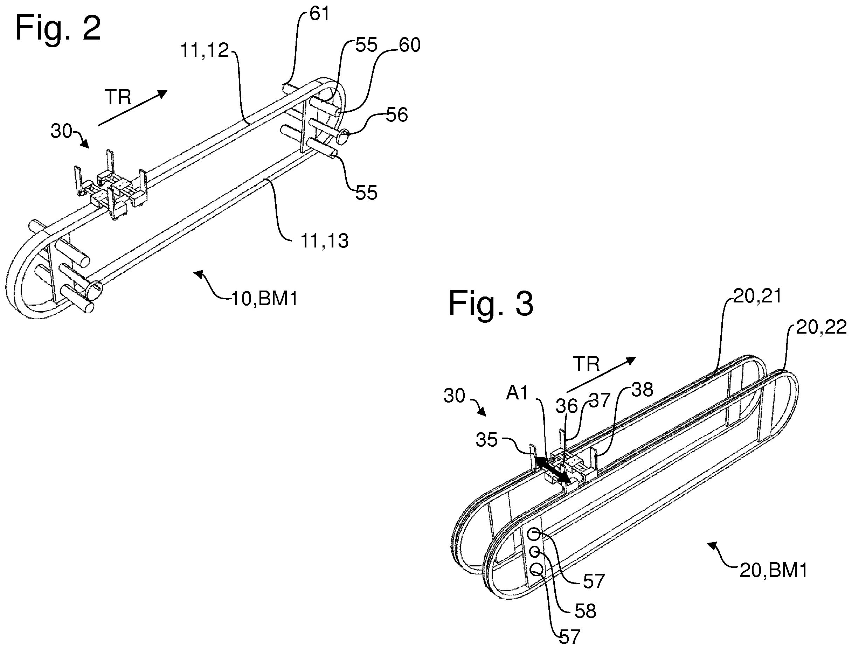

Die schematische Perspektivansicht der Fig. 1 zeigt eine erste Ausführungsform einer erfindungsgemäßen Transportvorrichtung 1, 1a in einem ersten Betriebsmodus BM1. Die schematische Perspektivansicht der Fig. 2 zeigt das Fördersystem 10 und die schematische Perspektivansicht der Fig. 3 zeigt das Führungs- und Verstellsystem 20 der erfindungsgemäßen Transportvorrichtung 1, 1a gemäß Fig. 1 im ersten Betriebsmodus BM1.

Insbesondere handelt es sich hierbei um eine Transportvorrichtung 1, 1a zum Transport von Stückgütern (nicht dargestellt), bspw. Paketen und/oder leeren oder mit Artikeln befüllten Umverpackungen. Die Transportvorrichtung 1, 1a umfasst ein Fördersystem 10 mit mindestens einer ersten umlaufenden Führungsschiene 11 mit einem Obertrum 12 und einem Untertrum 13 sowie einer Linearmotorantriebseinheit 14. Die Linearmotorantriebseinheit 14 umfasst eine Mehrzahl von im Bereich der ersten Führungsschiene 11 angeordneten Magnetspulen 15, von denen in Fig. 1 nur einige beispielhaft dargestellt sind. Die Magnetspulen 15 sind vorzugsweise über eine Steuerungseinrichtung 50 einzeln ansteuerbar und können jeweils einzeln bestromt werden.

An der ersten Führungsschiene 11 ist mindestens eine Transporteinheit 30 zur Aufnahme des jeweiligen Stückgutes (nicht dargestellt) zum Transport in Transportrichtung TR angeordnet. Insbesondere wird die mindestens eine Transporteinheit 30 auf dem Obertrum 12 in Transportrichtung TR und auf dem Untertrum 13 entgegen der Transportrichtung TR bewegt.

Die Transporteinheit 30 umfasst mindestens eine an der ersten Führungsschiene 11 angeordnete Bewegungseinrichtung 31 sowie eine der Bewegungseinrichtung 31 zugeordnete erste Halteeinrichtung 35 und eine zweite Halteeinrichtung 36. Im vorliegenden Fall weist die Transporteinheit 30 eine erste Bewegungseinrichtung 32 mit zugeordneter erster Halteeinrichtung 35 und zweiter Halteeinrichtung 36 sowie eine zweite Bewegungseinrichtung 33 mit einer zugeordneten dritten Halteeinrichtung 37 und einer vierten Halteeinrichtung 38 auf.

Das Stückgut wird zwischen der ersten Halteeinrichtung 35, der zweiten Halteeinrichtung 36, der dritten Halteeinrichtung 37 und der vierten Halteeinrichtung 38 angeordnet und durch diese gehalten und für den Transport fixiert. Insbesondere sind die Halteeinrichtungen 35, 36, 37, 38 derart ausgebildet, dass sie ein Verrutschen des auf einer Transporteinheit 30 angeordneten Stückgutes in Transportrichtung TR oder entgegen der Transportrichtung TR und/oder orthogonal zur Transportrichtung o.ä. verhindern.

Insbesondere wird durch die Halteeinrichtungen 35, 36, 37, 38 auch ein Verdrehen des Stückgutes auf der Transporteinheit 30 verhindert und eine positionsgenaue Anordnung des Stückgutes auf der Transporteinheit 30 erzielt. Dies gewährleistet bspw. eine definierte Anordnung und Ausrichtung einer Befüllöffnung des Stückgutes, so dass bspw. ein Stückgut in Form einer Kartonumverpackung mit Artikeln befüllt werden kann, während es sich auf der Transportvorrichtung 1, 1 a befindet und in Transportrichtung TR transportiert wird. Dabei kann vorgesehen sein, dass die Transportgeschwindigkeit der Transporteinheit 30 für den Befüllvorgang zumindest kurzzeitig reduziert wird, insbesondere auf einen Wert von Null.

Zur Bewegung der Transporteinheiten 30 durch die Transportvorrichtung 1, 1a entlang der mit Magnetspulen 15 ausgestatteten Führungsschiene 11 sind die Bewegungseinrichtungen 31 jeweils mit mindestens einem Permanentmagneten 40 ausgestattet. Insbesondere sind die erste Bewegungseinrichtung 32 und die zweite Bewegungseinrichtung 33 jeder Transporteinheit 30 jeweils mit einem Permanentmagneten 40 ausgestattet. Durch Bestromung einer Magnetspule 15 entsteht ein lokales Magnetfeld und somit ein Kraftfluss zwischen der Magnetspule 15 und dem/den Permanentmagneten 40 der Transporteinheit 30. Durch entsprechende Ansteuerung und Bestromung einzelner Magnetspulen 15 kann ein wanderndes Magnetfeld erzeugt werden, durch welches jede Transporteinheit 30 unabhängig von weiteren Transporteinheiten 30 bewegt werden kann.

Die Transporteinheiten 30 können an die Größe der zu befördernden Stückgüter angepasst werden, indem ein erster Abstand A1 zwischen der ersten Halteeinrichtung 35 und der zweiten Halteeinrichtung 36 sowie im Ausführungsbeispiel synchron dazu ein erster Abstand (nicht dargestellt) zwischen der dritten Halteeinrichtung 37 und der vierten Halteeinrichtung 38 orthogonal zur Transportrichtung TR verstellt werden kann und somit an eine Breite des Stückgutes quer zur Transportrichtung TR angepasst werden kann.

Die im vorliegenden Bespiel dargestellte Transporteinheit 30 kann aufgrund der Verwendung von zwei in Transportrichtung TR hintereinander angeordneten Bewegungseinrichtungen 31 zudem noch an eine Länge des Stückgutes in Transportrichtung TR gesehen angepasst werden, indem ein zweiter Abstand A2 zwischen der ersten Bewegungseinrichtung 32 und der zweiten Bewegungseinrichtung 33 eingestellt werden kann, so dass sich ein dritter Abstand A3 zwischen der ersten Halteeinrichtung 35 und der dritten Halteeinrichtung 37 sowie der zweiten Halteeinrichtung 36 und der vierten Halteeinrichtung 38 ergibt, die insbesondere gemäß der Länge des Stückgutes in Transportrichtung TR eingestellt wird. Diese Einstellung erfolgt insbesondere über eine gesteuerte Bestromung einzelner Magnetspulen 15 des Fördersystems 10. Im weiteren Produktionsablauf muss nach erfolgter Einstellung des zweiten Abstandes A2 zwischen der ersten Bewegungseinrichtung 32 und der zweiten Bewegungseinrichtung 33 sichergestellt werden, dass die beiden Bewegungseinrichtungen 32, 33 jeder Transporteinheit 30 synchron bewegt werden, so dass der eingestellte zweite Abstand A2 sowie der dritte Abstand A3 während des Transports eines Stückgutes durch die Transportvorrichtung 1, 1a konstant ist und nicht verändert wird.

Die Transportvorrichtung 1, 1a umfasst weiterhin ein Führungs- und Verstellsystem 20 (vgl. insbesondere Fig. 3) zur Einstellung des ersten Abstandes A1 zwischen der ersten Halteeinrichtung 35 und der zweiten Halteeinrichtung 36 sowie der dritten Halteeinrichtung 37 und der vierten Halteeinrichtung 38 orthogonal zur Transportrichtung TR. Das Führungs- und Verstellsystem 20 umfasst mindestens eine erste umlaufende Führungseinrichtung 21, die parallel zur ersten Führungsschiene 11 ausgebildet ist und auf der jeweils die erste Halteeinrichtung 35 und die dritte Halteeinrichtung 37 der Transporteinheit 30 geführt sind. Bei der dargestellten ersten Ausführungsform einer Transportvorrichtung 1, 1a mit Transporteinheiten 30 ist weiterhin eine zweite umlaufende Führungseinrichtung 22 vorgesehen, auf der jeweils die zweite Halteeinrichtung 36 und die vierte Halteeinrichtung 38 der Transporteinheit 30 geführt sind. Die beiden Führungseinrichtungen 21, 22 sind beidseitig parallel zur Führungsschiene 11 angeordnet. Die Bewegungseinrichtungen 31 der Transporteinheit 30 werden auf der Führungsschiene 11 angeordnet, geführt und angetrieben.

Die Führungseinrichtungen 21, 22 sind gegenüber der Führungsschiene 11 beweglich ausgebildet. Insbesondere sind den Führungseinrichtungen 21, 22 Mittel zur Abstandsveränderung gegenüber der Führungsschiene 11 zugeordnet. Bspw. weist die Führungsschiene 11 orthogonal zu Transportrichtung nach beiden Seiten weisende Gewindespindeln 55 mit Verstellkurbeln 56 auf. Die Führungseinrichtungen 21, 22 weisen entsprechende Aufnahmen 57 bzw. Durchtrittsöffnungen mit Innengewinde für die Gewindespindeln 55 auf sowie mindestens eine Aufnahme 58 bzw. Durchtrittsöffnung für die Verstellkurbel 56. Die Bewegung der Gewindespindeln 55 ist an die Bewegung der Verstellkurbel 56 gekoppelt. Zudem ist vorgesehen, dass jede Gewindespindel 55 im Bereich des einen freien Endes ein Linksgewinde 60 und im Bereich des gegenüberliegenden freien Endes ein Rechtsgewinde 61 aufweist. Die jeweils korrespondierenden Aufnahmen 57 der Führungseinrichtungen 21, 22 sind entsprechend dem aufzunehmenden Außengewinde 60, 61 mit korrespondierenden Innengewinden ausgebildet. Durch gleichmäßiges Drehen beider Verstellkurbeln 56 werden die Führungseinrichtungen 21, 22 parallel zur Führungsschiene 11 voneinander weg oder aufeinander zu bewegt, wodurch sich der erste Abstand A1 zwischen der ersten Halteeinrichtung 35 und der zweiten Halteeinrichtung 36 sowie der dritten Halteeinrichtung 37 und der vierten Halteeinrichtung 38 der Transporteinheit 30 verändert.

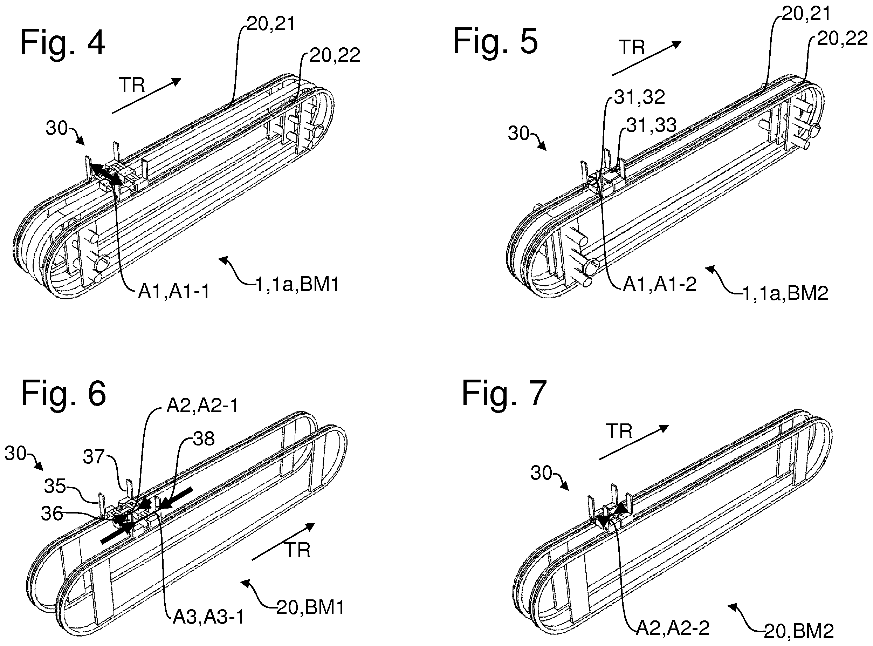

Die schematische Perspektivansicht der Fig. 4 zeigt erneut die erste Ausführungsform der erfindungsgemäßen Transportvorrichtung 1, 1a gemäß Fig. 1 in dem ersten Betriebsmodus BM1; die schematische Perspektivansicht der Fig. 5 zeigt im Vergleich hierzu die Transportvorrichtung 1, 1a gemäß Figuren 1 und 4 in einem zweiten Betriebsmodus BM2. Ergänzend hierzu zeigt die schematische Perspektivansicht der Fig. 6 das Führungs- und Verstellsystem 20 im ersten Betriebsmodus BM1, und die schematische Perspektivansicht der Fig. 7 zeigt das Führungs- und Verstellsystem 20 im zweiten Betriebsmodus BM2.

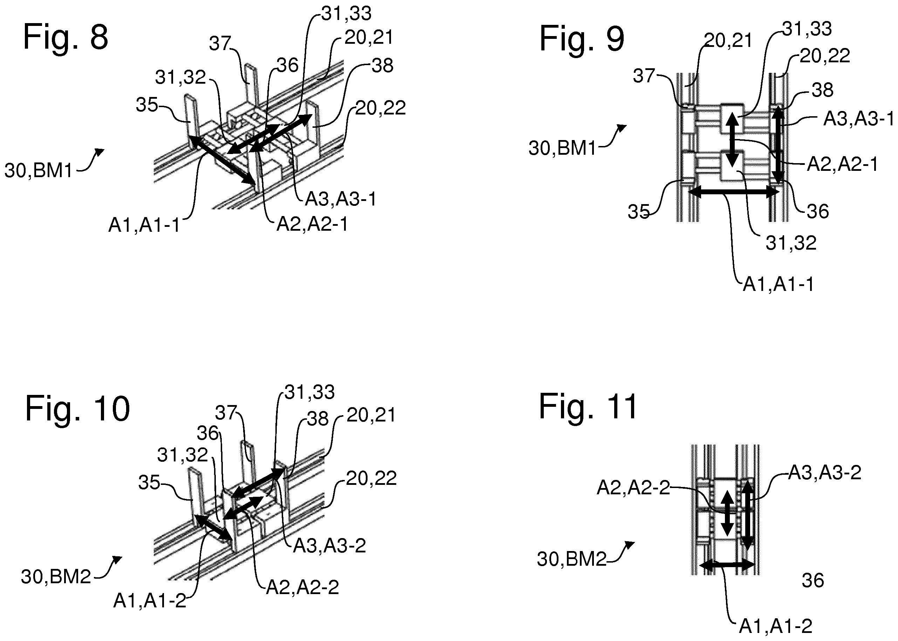

Zudem stellen die Figuren 8 bis 11 unterschiedliche Darstellungen der Transporteinheit 30 im ersten Betriebsmodus BM1 und im zweiten Betriebsmodus BM2 dar. Zur Erleichterung der Lesbarkeit der Darstellungen wurde in den Figuren 8 bis 11 jeweils die erste Führungsschiene 11 weggelassen. Insbesondere wird durch die Figuren 4 bis 11 verdeutlicht, dass durch eine Einstellung des Abstandes zwischen den parallel ausgerichteten Führungseinrichtungen 21, 22, der Abstand zwischen der ersten Halteeinrichtung 35 und der zweiten Halteeinrichtung 36 sowie der Abstand zwischen der dritten Halteeinrichtung 37 und der vierten Halteeinrichtung 38 jeder Transporteinheit 30 verändert wird. Insbesondere liegt im ersten Betriebsmodus BM1 ein erster Abstand A1-1 vor ist, der größer ist als der erste Abstand A1-2 im zweiten Betriebsmodus BM2. Somit können im ersten Betriebsmodus BM1 Stückgüter (nicht dargestellt) einer größeren Breite innerhalb der Transportvorrichtung 1, 1a befördert werden.

Zudem ist ersichtlich, dass der zweite Abstand A2-1 zwischen der ersten und der zweiten Bewegungseinrichtung 32, 33 im ersten Betriebsmodus BM1 größer gewählt ist als im zweiten Betriebsmodus BM2. Somit ist der dritte Abstand A3-1 zwischen der ersten Halteeinrichtung 35 und der dritten Halteeinrichtung 37 sowie zwischen der zweiten Halteeinrichtung 36 und der vierten Halteeinrichtung 38 im ersten Betriebsmodus BM1 ebenfalls größer als im zweiten Betriebsmodus BM2.

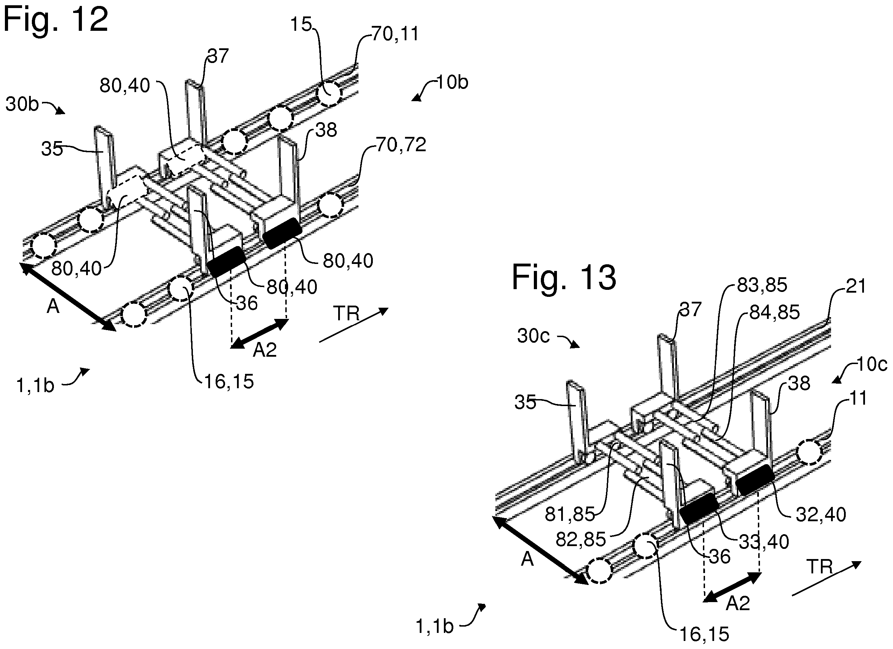

Die Fig. 12 zeigt eine perspektivische Darstellung einer Transporteinheit 30b an einer zweiten Ausführungsform einer Transportvorrichtung 1, 1b gemäß vorliegender Erfindung und die Fig. 13 zeigt eine perspektivische Darstellung einer Transporteinheit 30c an einer dritten Ausführungsform einer Transportvorrichtung 1, 1c gemäß vorliegender Erfindung.

Analog zu der in den Figuren 1 bis 11 dargestellten Ausführungsform weist jede Transporteinheit 30b, 30c vier Halteeinrichtungen 35, 36, 37, 38 zur Positionierung und Fixierung der zu transportierenden Stückgüter auf der jeweiligen Transporteinheit 30b, 30c auf. Das Fördersystem 10b umfasst im zweiten Ausführungsbeispiel gemäß Fig. 12 zwei Führungsschienen 70 auf, die jeweils mit Linearmotorantriebseinheiten 14 in Form von Magnetspulen 15 ausgestattet sind, insbesondere eine erste Führungsschiene 11 und eine zweite Führungsschiene 72. Bei diesem Ausführungsbeispiel umfasst jede Transporteinheit 30b insgesamt vier Bewegungseinrichtungen 80 (hier auch als weitere Bewegungseinrichtungen 80 bezeichnet), wobei jede Bewegungseinrichtung 80 bzw. jede weitere Bewegungseinrichtung 80 einen Permanentmagneten 40 umfasst, und wobei jeder Bewegungseinrichtung 80 eine Halteeinrichtung 35, 36, 37, 38 zugeordnet ist.

Durch Einstellung eines Abstandes A zwischen den parallel angeordneten ersten und zweiten Führungsschienen 11, 72 sowie durch Einstellung eines zweiten Abstandes A2 zwischen den jeweils auf derselben Führungsschiene 11, 72 angeordneten Bewegungseinrichtungen 80 kann die Transporteinheit 30b an die Größe des zu transportierenden Stückgutes (nicht dargestellt) angepasst werden.

Auch bei diesem Ausführungsbeispiel ist nach Einstellung des zweiten Abstandes A2 zwischen den in Transportrichtung TR fluchtend angeordneten Bewegungseinrichtungen 80 darauf zu achten, dass diese im laufenden Produktionsbetrieb synchron gesteuert bewegt werden, um einen sicheren Transport der Stückgüter zu gewährleisten. Zudem müssen auch die einander gegenüberliegenden Bewegungseinrichtungen 80 an den unterschiedlichen Führungsschienen 11, 72 synchron gesteuert durch die Transportvorrichtung 1b bewegt werden, um ein Auseinanderdriften der ersten Halteeinrichtung 35 und der zweiten Halteeinrichtung 36 und/oder der dritten Halteeinrichtung 37 und der vierten Halteeinrichtung 38 in Transportrichtung TR zu vermeiden.

Das Fördersystem 10c umfasst im dritten Ausführungsbeispiel einer Transportvorrichtung 1c gemäß Fig. 13 eine erste Führungsschiene 11 mit Linearmotorantriebseinheit 14 in Form von Magnetspulen 15 und eine erste Führungseinrichtung 21. Bei diesem Ausführungsbeispiel umfasst jede Transporteinheit 30c insgesamt zwei an der ersten Führungsschiene 11 angeordnete Bewegungseinrichtungen 32, 33 mit Permanentmagneten 40. An der in Transportrichtung TR vorauseilenden ersten Bewegungseinrichtung 32 ist die vierte Halteeinrichtung 38 angeordnet.

An der in Transportrichtung TR nachlaufenden zweiten Bewegungseinrichtung 33 ist die zweite Halteeinrichtung 36 angeordnet. Die erste Halteeinrichtung 35 und die dritte Halteeinrichtung 37 der Transporteinheit 30c sind dagegen auf der Führungseinrichtung 21 geführt angeordnet. Durch Einstellung eines Abstandes A zwischen der angeordneten ersten Führungsschiene 11 und der parallel dazu angeordneten ersten Führungseinrichtung 21 sowie durch Einstellung eines zweiten Abstandes A2 zwischen den an der ersten Führungsschiene 11 angeordneten Bewegungseinrichtungen 32, 33, kann die Transporteinheit 30c an die Größe des zu transportierenden Stückgutes (nicht dargestellt) angepasst werden.

Auch bei diesem Ausführungsbeispiel ist nach Einstellung des zweiten Abstandes A2 zwischen den in Transportrichtung TR fluchtend angeordneten Bewegungseinrichtungen 32, 33 darauf zu achten, dass diese im laufenden Produktionsbetrieb synchron gesteuert bewegt werden, um einen sicheren Transport der Stückgüter bei konstanter Größe der Transporteinheit 30c zu gewährleisten. Weiterhin kann eine mechanische Kopplung zwischen den die erste Halteeinrichtung 35 und die dritte Halteeinrichtung 37 umfassenden Bereichen der Transporteinheit 30c mit den die zweite Halteeinrichtung 36 und die vierte Halteeinrichtung 38 umfassenden Bereichen der Transporteinheit 30c notwendig und/oder vorteilhaft sein.

Die mechanische Kopplung soll insbesondere gewährleisten, dass die die erste Halteeinrichtung 35 und die dritte Halteeinrichtung 37 umfassenden Bereiche der Transporteinheit 30c bei Bewegung der Bewegungseinrichtungen 32, 33 in Transportrichtung synchron mit den die zweite Halteeinrichtung 36 und die vierte Halteeinrichtung 38 umfassenden Bereichen der Transporteinheit 30c mitgeführt werden. Die mechanische Kopplung muss insbesondere dergestalt ausgebildet sein, dass eine Abstandsveränderung zwischen der ersten Halteeinrichtung 35 und der zweiten Halteeinrichtung 36 sowie der dritten Halteeinrichtung 37 und der vierten Halteeinrichtung 38 orthogonal zu Transportrichtung TR möglich ist. Die beschriebene mechanische Kopplung ist nicht nur auf das Ausführungsbeispiel der Transporteinheiten 30c beschränkt, sondern kann insbesondere auch bei anderweitig ausgestalteten Transporteinheiten vorteilhaft eingesetzt werden.

Wie in den Figuren 12 und 13 zu erkennen ist (Bezugszeichen hierzu nur in Fig. 13), kann eine mechanische Kopplung bspw. dadurch erzielt werden, dass der ersten Halteeinrichtung 35 ein in Richtung der zweiten Halteeinrichtung 36 weisender erster Teilbereich 81 zugeordnet ist und dass der zweiten Halteeinrichtung 36 ein in Richtung der ersten Halteeinrichtung 35 weisender zweiter Teilbereich 82 zugeordnet ist, wobei der erste Teilbereich 81 und der zweite Teilbereich 82 eine erste gemeinsame Teil-Aufstandsfläche für das zu transportierende Stückgut bilden. Weiterhin ist der dritten Halteeinrichtung 37 ein in Richtung der vierten Halteeinrichtung 38 weisender dritter Teilbereich 83 zugeordnet und der vierten Halteeinrichtung 38 ist ein in Richtung der dritten Halteeinrichtung 37 weisender vierter Teilbereich 84 zugeordnet ist, wobei der dritte Teilbereich 83 und der vierte Teilbereich 84 eine zweite gemeinsame Teil-Aufstandsfläche für das zu transportierende Stückgut bilden. Insbesondere bilden die erste gemeinsame Teil-Aufstandsfläche und die zweite gemeinsame Teil-Aufstandsfläche die Gesamt-Aufstandsfläche der Transporteinheit 30c.

Besonders bevorzugt sind die Teilbereiche 81, 82, 83, 84 jeweils als Kammstruktur 85 mit Kammzinken ausgebildet, wobei die Kammzinken des ersten Teilbereichs 81 zwischen die Kammzinken des zweiten Teilbereich 82 greifen, und wobei die Kammzinken des dritten Teilbereichs 83 zwischen die Kammzinken des vierten Teilbereichs 84 greifen. Insbesondere ist vorgesehen, dass die Kammzinken in jedem einstellbaren Betriebsmodus jeweils zumindest bereichsweise ineinandergreifen, wodurch eine mechanische Kopplung zwischen der ersten Halteeinrichtung 35 und der zweiten Halteeinrichtung 36 sowie zwischen der dritten Halteeinrichtung 37 und der vierten Halteeinrichtung 38 erzielt wird. Um dieses zumindest bereichsweise Ineinandergreifen in jedem Betriebs- und/oder Produktionsmodus zu gewährleisten, kann eine Begrenzungseinrichtung vorgesehen sein, die ein komplettes Auseinanderziehen der Kammzinken verhindert, bspw. eine mechanische Sperreinrichtung an den Transporteinheiten 30, 30b, 30c selbst. Die Begrenzung der Abstandsveränderung kann aber auch durch eine Begrenzung der Abstandsveränderung zwischen der mindestens einen Führungsschiene 11 und der mindestens einen Führungseinrichtung 21 gemäß einer vorbeschriebenen Ausführungsform erfolgen, die bspw. durch die Länge der verwendeten Gewindespindel 55 o.ä. begrenzt wird (vgl. Fig. 1).

Wenn auch im Zusammenhang der Figuren generell von "schematischen" Darstellungen und Ansichten die Rede ist, so ist damit keineswegs gemeint, dass die Figurendarstellungen hinsichtlich der Offenbarung der Erfindung von untergeordneter Bedeutung sein sollen. Der Fachmann ist durchaus in der Lage, aus den schematisch und abstrakt gezeichneten Darstellungen genügend Informationen zu entnehmen, die ihm das Verständnis der Erfindung erleichtern, ohne dass er etwa aus den gezeichneten und möglicherweise nicht exakt maßstabsgerechten Größenverhältnissen der Transporteinheiten und/oder Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für die Erfindung.

Auch wenn in den vorliegenden Figuren jeweils Transporteinheiten 30, 30b, 30c mit vier Halteeinrichtungen 35, 36, 37, 38 beschrieben sind, so sind für den Fachmann weitere Transporteinheiten offenbart, die nur zwei Halteeinrichtungen 35, 36 aufweisen, die in einem ersten Abstand A1 orthogonal zur Transportrichtung TR variabel einstellbar ausgebildet und an der Transportvorrichtung 1 angeordnet sind.

### Bezuaszeichenliste

- 1: Transportvorrichtung
- 1a, 1b, 1c: Transportvorrichtung
- 10, 10b, 10c: Fördersystem
- 11: erste Führungsschiene
- 12: Obertrum
- 13: Untertrum
- 14: Linearmotorantriebseinheit
- 15: Magnetspule
- 20: Führungs- und Verstellsystem
- 21: erste Führungseinrichtung
- 22: zweite Führungseinrichtung
- 30, 30b, 30c: Transporteinheit
- 31: Bewegungseinrichtung
- 32: erste Bewegungseinrichtung
- 33: zweite Bewegungseinrichtung
- 35: erste Halteeinrichtung
- 36: zweite Halteeinrichtung
- 37: dritte Halteeinrichtung
- 38: vierte Halteeinrichtung
- 40: Permanentmagnet
- 50: Steuerungseinrichtung
- 55: Gewindespindel
- 56: Verstellkurbel
- 57: Aufnahme mit Innengewinde
- 58: Aufnahme
- 60: Außengewinde, Linksgewinde
- 61: Außengewinde, Rechtsgewinde
- 70: Führungsschiene
- 72: zweite Führungsschiene
- 80: Bewegungseinrichtung, weitere Bewegungseinrichtung
- 81: erster Teilbereich
- 82: zweiter Teilbereich
- 83: dritter Teilbereich
- 84: vierter Teilbereich
- 85: Kammstruktur

- A: Abstand
- A1, A1-1, A1-2: erster Abstand
- A2, A2-1, A2-2: zweiter Abstand
- A3, A3-1, A3-2: dritter Abstand
- BM1: erster Betriebsmodus
- BM2: zweiter Betriebsmodus
- TR: Transportrichtung

## Patentansprüche

1. Transportvorrichtung (1) für Stückgüter mit mindestens einer ersten Führungsschiene (11), wobei die Transportvorrichtung (1) ein Linearmotorantriebssystem umfasst,
- wobei das Linearmotorantriebssystem eine Mehrzahl von im Bereich der ersten Führungsschiene (11) angeordneten Magnetspulen (15) umfasst,
- und mit mindestens einer der ersten Führungsschiene (11) zugeordneten oder an dieser angeordneten Transporteinheit (30), umfassend mindestens eine der ersten Führungsschiene (11) zugeordnete oder an der ersten Führungsschiene (11) angeordnete Bewegungseinrichtung (31) mit mindestens einem Permanentmagneten (40),
- wobei die mindestens eine Transporteinheit (30) zumindest bereichsweise in einer Transportrichtung (TR) beweglich ist,
- wobei die Transporteinheit (30) eine erste Halteeinrichtung (35) und eine zweite Halteeinrichtung (36) umfasst, zwischen denen das Stückgut anordenbar und/oder fixierbar ist,
- wobei ein erster Abstand (A1) zwischen der ersten Halteeinrichtung (35) und der zweiten Halteeinrichtung (36) orthogonal zur Transportrichtung (TR) einstellbar ist,
**dadurch gekennzeichnet, dass** die Transportvorrichtung (1) mindestens eine erste Führungseinrichtung (21) umfasst, die parallel zur ersten Führungsschiene (11) angeordnet oder ausgebildet ist, und an der die erste Halteeinrichtung (35) der mindestens einen Transporteinheit (30) geführt ist.

2. Transportvorrichtung nach Anspruch 1, bei der die zweite Halteeinrichtung (36) der Transporteinheit und die Bewegungseinrichtung (31) an der ersten Führungsschiene (11) geführt angeordnet sind.

3. Transportvorrichtung nach Anspruch 1 oder 2, bei der zumindest die erste Führungseinrichtung (21) beweglich ausgebildet ist, insbesondere relativ zur ersten Führungsschiene (11) beweglich, insbesondere wobei der ersten Führungseinrichtung (21) Mittel zur Abstandsveränderung gegenüber der ersten Führungsschiene (11) zugeordnet sind.

4. Transportvorrichtung nach Anspruch 3, bei der durch eine Änderung eines Abstandes (A) zwischen der ersten Führungseinrichtung (21) und der ersten Führungsschiene (11) eine Änderung des ersten Abstandes (A1) zwischen der ersten Halteeinrichtung (35) und der zweiten Halteeinrichtung (36) orthogonal zur Transportrichtung (TR) einstellbar ist.

5. Transportvorrichtung nach Anspruch 3, bei der die Transportvorrichtung (1) eine Gewindespindel (55) zur Änderung eines Abstandes zwischen der ersten Führungseinrichtung (21) und der ersten Führungsschiene (11) umfasst.

6. Transportvorrichtung nach Anspruch 1, bei der die Transportvorrichtung (1) eine erste Führungseinrichtung (21) und eine zweite Führungseinrichtung (22) umfasst,
- wobei die erste Führungseinrichtung (21) und die zweite Führungseinrichtung (22) beidseitig parallel zur ersten Führungsschiene (11) angeordnet sind,
- wobei an der ersten Führungseinrichtung (21) die erste Halteeinrichtung (35) der Transporteinheit (30) und an der zweiten Führungseinrichtung (22) die zweite Halteeinrichtung (36) der Transporteinheit (30) geführt sind,
- und wobei die Bewegungseinrichtung (31) der jeweiligen Transporteinheit (30) an der mittig zwischen der ersten Führungseinrichtung (21) und der zweiten Führungseinrichtung (22) angeordneten ersten Führungsschiene (11) angeordnet und geführt ist.

7. Transportvorrichtung nach Anspruch 6, bei der die erste Führungseinrichtung (21) und die zweite Führungseinrichtung (22) gegeneinander zustellbar ausgebildet sind, insbesondere synchron zueinander zustellbar oder voneinander beabstandbar, insbesondere wobei die Transportvorrichtung (1) eine Gewindespindel (55) zur Änderung eines Abstandes zwischen der ersten Führungseinrichtung (21) und der ersten Führungsschiene (11) und zwischen der zweiten Führungseinrichtung (22) und der ersten Führungsschiene (11) umfasst.

8. Transportvorrichtung nach Anspruch 1, bei der die erste Führungseinrichtung (21) eine zweite Führungsschiene (72) mit Linearmotorantriebssystem ist und insbesondere eine Mehrzahl von Magnetspulen (15) umfasst,
- und wobei die mindestens eine Transporteinheit (30) eine der ersten Halteeinrichtung (35) zugeordnete erste Bewegungseinrichtung (32) und eine der zweiten Halteeinrichtung (36) zugeordnete zweite Bewegungseinrichtung (33) umfasst,
- wobei die erste Bewegungseinrichtung (32) an der ersten Führungsschiene (11) angeordnet ist,
- und wobei die zweite Bewegungseinrichtung (33) an der zweiten Führungsschiene (72) angeordnet ist, und wobei die Transportvorrichtung (1) eine Steuerungseinheit oder Steuerungseinrichtung (50) zur Synchronisierung der Bewegung der ersten Bewegungseinrichtung (32) und der zweiten Bewegungseinrichtung (33) umfasst.

9. Transportvorrichtung nach Anspruch 1, bei welcher der ersten Halteeinrichtung (35) ein in Richtung der zweiten Halteeinrichtung (36) weisender erster Teilbereich (81) zugeordnet ist und wobei der zweiten Halteeinrichtung (36) ein in Richtung der ersten Halteeinrichtung (35) weisender zweiter Teilbereich (82) zugeordnet ist, wobei der erste Teilbereich (81) und der zweite Teilbereich (82) eine gemeinsame Aufstandsfläche für das zu transportierende Stückgut bilden.

10. Transportvorrichtung nach Anspruch 9, bei welcher der erste Teilbereich (81) und der zweite Teilbereich (82) jeweils eine Kammstruktur (85) mit Kammzinken aufweisen, wobei die Kammzinken des ersten Teilbereichs (81) und des zweiten Teilbereichs (82) zumindest teilweise ineinandergreifend angeordnet sind.

11. Transportvorrichtung nach Anspruch 1, bei der eine Transporteinheit (30) eine in Transportrichtung (TR) vorauseilende erste Bewegungseinrichtung (32) und eine in Transportrichtung (TR) nachlaufende zweite Bewegungseinrichtung (33) umfasst, wobei der ersten Bewegungseinrichtung (32) die erste Halteeinrichtung (35) und die zweite Halteeinrichtung (36) zugeordnet sind, zwischen denen der Abstand (A1) orthogonal zur Transportrichtung (TR) variabel einstellbar ist und wobei der zweiten Bewegungseinrichtung (33) eine dritte Halteeinrichtung (37) und eine vierte Halteeinrichtung (38) zugeordnet sind, zwischen denen ebenfalls ein erster Abstand (A1) orthogonal zur Transportrichtung (TR) variabel einstellbar ist.

12. Transportvorrichtung nach Anspruch 11, bei der ein zweiter Abstand (A2) zwischen der ersten Bewegungseinrichtung (32) und der zweiten Bewegungseinrichtung (33) einer Transporteinheit (30) in Transportrichtung (TR) einstellbar ist, wodurch ein dritter Abstand (A3) zwischen der ersten Halteeinrichtung (35) und der dritten Halteeinrichtung (37) sowie zwischen der zweiten Halteeinrichtung (36) und der vierten Halteeinrichtung (38) einstellbar ist.

13. Verfahren zum Anpassen einer Transportvorrichtung (1) für Stückgüter gemäß einem der Ansprüche 1 bis 12, bei einem Produktwechsel an jeweilige Abmessungen der im Anschluss an den Produktwechsel zu transportierenden Stückgüter, wobei die Transportvorrichtung (1) mindestens eine ersten Führungsschiene (11) mit einem Linearmotorantriebssystem und mindestens eine an der ersten Führungsschiene (11) angeordnete Transporteinheit (30) für die Stückgüter mit einer ersten Halteeinrichtung (35) und einer zweiten Halteeinrichtung (36) umfasst, wobei die mindestens eine Transporteinheit (30) zumindest bereichsweise in einer Transportrichtung (TR) bewegt werden kann, wobei die Transportvorrichtung (1) und die mindestens eine Transporteinheit (30) derart einstellbar ausgebildet sind, dass ein erster Abstand (A1) zwischen der ersten Halteeinrichtung (35) und der zweiten Halteeinrichtung (36) der Transporteinheit (30) orthogonal zu einer Transportrichtung (TR) für die Stückgüter innerhalb der Transportvorrichtung (1) entsprechend den Abmessungen des jeweilig zu transportierenden Stückgutes eingestellt werden kann.

## Claims

1. A transport device (1) for piece goods with at least one first guide rail (11), wherein the transport device (1) comprises a linear motor drive system,
- wherein the linear motor drive system comprises a plurality of magnetic coils (15) arranged within the region of the first guide rail (11),
- and having at least one transport unit (30), which transport unit (30) is associated with or arranged on the first guide rail (11), comprising at least one movement device (31), the movement device (31) being associated with or arranged on the first guide rail (11) and which movement device (31) comprises at least one permanent magnet (40),
- wherein the at least one transport unit (30) is movable at least in regions in a transport direction (TR),
- wherein the transport unit (30) comprises a first holding device (35) and a second holding device (36), between which holding devices the piece good can be arranged and/or fixed,
- wherein a first distance (A1) between the first holding device (35) and the second holding device (36) is adjustable in a direction orthogonal to the transport direction (TR),
**characterised in that**
- the transport device (1) comprises at least one first guiding device (21), which first guiding device (21) is arranged or formed parallel to the first guide rail (11) and on which first guiding device (21) the first holding device (35) of the at least one transport unit (30) is guided.

2. The transport device according to claim 1, in which the second holding device (36) of the transport unit and the movement device (31) are arranged in a guided manner on the first guide rail (11).

3. The transport device according to claim 1 or 2, in which at least the first guiding device (21) is designed to be movable, in particular movable relative to the first guide rail (11), in particular wherein means for changing the distance relative to the first guide rail (11) are assigned to the first guiding device (21).

4. The transport device according to claim 3, in which by means of a change in a distance (A) between the first guiding device (21) and the first guide rail (11) a change of the first distance (A1) between the first holding device (35) and the second holding device (36) in a direction orthogonal to the transport direction (TR) can be adjusted.

5. The transport device according to claim 3, wherein the transport device (1) comprises a threaded spindle (55) for changing a distance between the first guiding device (21) and the first guide rail (11).

6. The transport device according to claim 1, wherein the transport device (1) comprises a first guiding device (21) and a second guiding device (22),
- wherein the first guiding device (21) and the second guiding device (22) are arranged parallel on both sides to the first guide rail (11),
- wherein the first holding device (35) of the transport unit (30) is guided on the first guiding device (21) and wherein the second holding device (36) of the transport unit (30) is guided on the second guiding device (22),
- and wherein the movement device (31) of the respective transport unit (30) is arranged and guided on the first guide rail (11), which first guide rail (11) is arranged centrally between the first guiding device (21) and the second guiding device (22).

7. The transport device according to claim 6, in which the first guiding device (21) and the second guiding device (22) are designed to be reciprocally adjustable, in particular in which they can be synchronously advanced towards one another or spaced apart from one another, in particular the transport device (1) comprising a threaded spindle (55) for changing a distance between the first guiding device (21) and the first guide rail (11) and between the second guiding device (22) and the first guide rail (11).

8. The transport device according to claim 1, wherein the first guiding device (21) is a second guide rail (72) with linear motor drive system and comprises in particular a plurality of magnetic coils (15),
- and wherein the at least one transport unit (30) comprises a first movement device (32) associated with the first holding device (35) and a second movement device (33) associated with the second holding device (36),
- wherein the first movement device (32) is arranged on the first guide rail (11),
- and wherein the second movement device (33) is arranged on the second guide rail (72), and wherein the transport device (1) comprises a control unit or control device (50) for synchronizing the movement of the first movement device (32) and the second movement device (33).

9. The transport device according to claim 1, in which a first partial region (81) is assigned to the first holding device (35), which first partial region (81) is pointing in the direction of the second holding device (36), and in which a second partial region (82) is assigned to the second holding device (36), which second partial region (82) is pointing in the direction of the first holding device (35), the first partial region (81) and the second partial region (82) forming a common standing surface for the piece good to be transported.

10. The transport device according to claim 9, wherein the first partial region (81) and the second partial region (82) each comprise a comb structure (85) with comb teeth, the comb teeth of the first partial region (81) and the second partial region (82) being arranged at least partially interlocking.

11. The transport device according to claim 1, in which a transport unit (30) comprises a first movement device (32), which is leading in the transport direction (TR), and a second movement device (33), which is trailing in the transport direction (TR), wherein the first holding device (35) and the second holding device (36) are assigned to the first movement device (32), between which first holding device (35) and second holding device (36) the distance (A1) can be variably set orthogonally to the transport direction (TR), and wherein a third holding device (37) and a fourth holding device (38) are assigned to the second movement device (33), between which third holding device (37) and fourth holding device (38) a first distance (A1) can likewise be variably set orthogonally to the transport direction (TR).

12. The transport device according to claim 11, wherein a second distance (A2) between the first movement device (32) and the second movement device (33) of a transport unit (30) is adjustable in the transport direction (TR), by means of which a third distance (A3) between the first holding device (35) and the third holding device (37) and between the second holding device (36) and the fourth holding device (38) is adjustable.

13. A method for adapting a transport device (1) for piece goods according to one of the claims 1 to 12 during a product change to the respective dimensions of the piece goods, which piece goods are to be transported following the product change, wherein the transport device (1) comprises at least one first guide rail (11) with a linear motor drive system and at least one transport unit (30) for the piece goods, which transport unit (30) is arranged on the first guide rail (11) and which transport unit (30) comprises a first holding device (35) and a second holding device (36), wherein the at least one transport unit (30) can be moved at least in regions in a transport direction (TR), wherein the transport device (1) and the at least one transport unit (30) are designed to be adjustable in such a way that a first distance (A1) between the first holding device (35) and the second holding device (36) of the transport unit (30) can be adjusted in a direction orthogonal to a transport direction (TR) for the piece goods within the transport device (1), which first distance (A1) is adjusted in accordance with the dimensions of the respective piece goods to be transported.

## Revendications

1. Dispositif de transport (1) pour des produits de détail, avec au moins un premier rail de guidage (11), dans lequel le dispositif de transport (1) comprend un système d'entraînement à moteur linéaire,
- dans lequel le système d'entraînement à moteur linéaire comprend une pluralité de bobines magnétiques (15) disposées au niveau du premier rail de guidage (11),
- et avec au moins une unité de transport (30) associée au premier rail de guidage (11) ou disposée sur celui-ci, comprenant au moins un dispositif de déplacement (31) associé au premier rail de guidage (11) ou disposé sur le premier rail de guidage (11) et ayant au moins un aimant permanent (40),
- dans lequel ladite au moins une unité de transport (30) est au moins en partie déplaçable dans une direction de transport (TR),
- dans lequel l'unité de transport (30) comprend un premier dispositif de maintien (35) et un deuxième dispositif de maintien (36) entre lesquels le produit de détail peut être disposé et/ou fixé,
- dans lequel une première distance (A1) entre le premier dispositif de maintien (35) et le deuxième dispositif de maintien (36), orthogonale à la direction de transport (TR) peut être réglée,
**caractérisé par le fait que**
- le dispositif de transport (1) comprend au moins un premier dispositif de guidage (21) qui est disposé ou réalisé parallèlement au premier rail de guidage (11) et sur lequel est guidé le premier dispositif de maintien (35) de ladite au moins une unité de transport (30).

2. Dispositif de transport selon la revendication 1, dans lequel le deuxième dispositif de maintien (36) de l'unité de transport et le dispositif de déplacement (31) sont disposés de manière guidée sur le premier rail de guidage (11).

3. Dispositif de transport selon la revendication 1 ou 2, dans lequel au moins le premier dispositif de guidage (21) est conçu de manière à être déplaçable, en particulier déplaçable par rapport au premier rail de guidage (11), en particulier dans lequel des moyens destinés à modifier la distance par rapport au premier rail de guidage (11) sont associés au premier dispositif de guidage (21).

4. Dispositif de transport selon la revendication 3, dans lequel une modification de la première distance (A1) entre le premier dispositif de maintien (35) et le deuxième dispositif de maintien (36), orthogonale à la direction de transport (TR) peut être réglée en modifiant une distance (A) entre le premier dispositif de guidage (21) et le premier rail de guidage (11).

5. Dispositif de transport selon la revendication 3, dans lequel le dispositif de transport (1) comprend une broche filetée (55) destinée à modifier une distance entre le premier dispositif de guidage (21) et le premier rail de guidage (11).

6. Dispositif de transport selon la revendication 1, dans lequel le dispositif de transport (1) comprend un premier dispositif de guidage (21) et un deuxième dispositif de guidage (22),
- dans lequel le premier dispositif de guidage (21) et le deuxième dispositif de guidage (22) sont disposés des deux côtés parallèlement au premier rail de guidage (11),
- dans lequel le premier dispositif de maintien (35) de l'unité de transport (30) est guidé sur le premier dispositif de guidage (21) et le deuxième dispositif de maintien (36) de l'unité de transport (30) est guidé sur le deuxième dispositif de guidage (22),
- et dans lequel le dispositif de déplacement (31) de l'unité de transport (30) respective est disposé et guidé sur le premier rail de guidage (11) disposé de manière centrale entre le premier dispositif de guidage (21) et le deuxième dispositif de guidage (22).

7. Dispositif de transport selon la revendication 6, dans lequel le premier dispositif de guidage (21) et le deuxième dispositif de guidage (22) sont conçus de manière à pouvoir être rapprochés l'un de l'autre, en particulier à pouvoir être rapprochés ou espacés l'un de l'autre de manière synchrone, en particulier dans lequel le dispositif de transport (1) comprend une broche filetée (55) destinée à modifier une distance entre le premier dispositif de guidage (21) et le premier rail de guidage (11) et entre le deuxième dispositif de guidage (22) et le premier rail de guidage (11).

8. Dispositif de transport selon la revendication 1, dans lequel le premier dispositif de guidage (21) est un deuxième rail de guidage (72) ayant un système d'entraînement à moteur linéaire et comprend en particulier une pluralité de bobines magnétiques (15),
- et dans lequel ladite au moins une unité de transport (30) comprend un premier dispositif de déplacement (32) associé au premier dispositif de maintien (35) et un deuxième dispositif de déplacement (33) associé au deuxième dispositif de maintien (36),
- dans lequel le premier dispositif de déplacement (32) est disposé sur le premier rail de guidage (11),
- et dans lequel le deuxième dispositif de déplacement (33) est disposé sur le deuxième rail de guidage (72), et dans lequel le dispositif de transport (1) comprend une unité de commande ou un dispositif de commande (50) pour synchroniser le mouvement du premier dispositif de déplacement (32) et du deuxième dispositif de déplacement (33).

9. Dispositif de transport selon la revendication 1, dans lequel une première zone partielle (81) montrant en direction du deuxième dispositif de maintien (36) est associée au premier dispositif de maintien (35), et dans lequel une deuxième zone partielle (82) montrant en direction du premier dispositif de maintien (35) est associée au deuxième dispositif de maintien (36), dans lequel la première zone partielle (81) et la deuxième zone partielle (82) forment une surface d'appui commune pour le produit de détail à transporter.

10. Dispositif de transport selon la revendication 9, dans lequel la première zone partielle (81) et la deuxième zone partielle (82) présentent chacune une structure en peigne (85) à dents de peigne, dans lequel les dents de peigne de la première zone partielle (81) et de la deuxième zone partielle (82) sont disposées de manière à s'engrener au moins en partie.

11. Dispositif de transport selon la revendication 1, dans lequel une unité de transport (30) comprend un premier dispositif de déplacement (32) situé en amont dans la direction de transport (TR) ainsi qu'un deuxième dispositif de déplacement (33) situé en aval dans la direction de transport (TR), dans lequel le premier dispositif de maintien (35) et le deuxième dispositif de maintien (36) entre lesquels la distance (A1) orthogonale à la direction de transport (TR) peut être réglée de manière variable sont associés au premier dispositif de déplacement (32), et dans lequel un troisième dispositif de maintien (37) et un quatrième dispositif de maintien (38) entre lesquels, également, une première distance (A1) orthogonale à la direction de transport (TR) peut être réglée de manière variable sont associés au deuxième dispositif de déplacement (33).

12. Dispositif de transport selon la revendication 11, dans lequel une deuxième distance (A2) entre le premier dispositif de déplacement (32) et le deuxième dispositif de déplacement (33) d'une unité de transport (30) dans la direction de transport (TR) est réglable, ce par quoi une troisième distance (A3) entre le premier dispositif de maintien (35) et le troisième dispositif de maintien (37) ainsi qu'entre le deuxième dispositif de maintien (36) et le quatrième dispositif de maintien (38) est réglable.

13. Procédé d'adaptation d'un dispositif de transport (1) pour des produits de détail selon l'une quelconque des revendications 1 à 12, dans le cas d'un changement de produit, à des dimensions respectives des produits de détail à transporter suite au changement de produit, dans lequel le dispositif de transport (1) comprend au moins un premier rail de guidage (11) ayant un système d'entraînement à moteur linéaire ainsi qu'au moins une unité de transport (30) pour les produits de détail qui est disposée sur le premier rail de guidage (11) et comprend un premier dispositif de maintien (35) et un deuxième dispositif de maintien (36), dans lequel ladite au moins une unité de transport (30) peut être déplacée au moins en partie dans une direction de transport (TR), dans lequel le dispositif de transport (1) et ladite au moins une unité de transport (30) peuvent être réglés de telle manière qu'une première distance (A1) entre le premier dispositif de maintien (35) et le deuxième dispositif de maintien (36) de l'unité de transport (30), orthogonale à une direction de transport (TR) pour les produits de détail à l'intérieur du dispositif de transport (1) peut être réglée en fonction des dimensions du produit de détail respectif à transporter.
